# EUROPÄISCHE PATENTSCHRIFT

(11) **EP 2 338 726 B1**
(45) Veröffentlichungstag und Bekanntmachung des Hinweises auf die Patenterteilung: **11.04.2018**
(21) Anmeldenummer: 10015664.5
(22) Anmeldetag: 15.12.2010
(51) Int. Cl.: B60N 2/70, F16B 21/07

(54) **Befestigungsclip für ein Sitzteil mit einem Drahtrahmen**
Fixing clip for a seat section with a wire frame
Clip de fixation pour un élément de siège doté d'un cadre en fil d'acier

(30) Priorität: 15.12.2009 DE 102009058197
(43) Veröffentlichungstag der Anmeldung: 29.06.2011
(73) Patentinhaber: Adient Luxembourg Holding S.à r.l., 1855 Luxembourg (LU)
(72) Erfinder: Morell, Nicholas, Beverly, East Yorkshire HU 17 0UQ (GB)
(74) Vertreter: Wolff, Felix

(56) Entgegenhaltungen:
- EP-A2- 1 630 426
- WO-A1-2007/104530
- JP-U- S63 181 561
- US-A- 4 728 068
- US-A- 4 878 641
- US-A1- 2004 052 575
- US-A1- 2005 034 282
- US-A1- 2009 064 471

## Beschreibung

Die vorliegende Erfindung betrifft ein Fahrzeug mit Befestigungsmitteln. Befestigungsmittel in Automobilen sind beispielsweise aus der DE 35 27 246 C1 der US 4,742,984 sowie der US 4,822,092 bekannt. Die dort beschriebenen Befestigungsmittel haben jedoch den Nachteil, dass sie entweder nicht lösbar oder vergleichsweise aufwendig gestaltet sind.

Es war deshalb die Aufgabe der vorliegenden Erfindung ein Befestigungsmittel für ein Automobil zur Verfügung zu stellen, das die Nachteile des Standes der Technik nicht aufweist.

Gelöst wird die Aufgabe mit den Merkmalen von Anspruch 1. Die vorliegende Erfindung umfaßt Befestigungsmittel für ein Automobil, mit denen reversibel Ausstattungsteile, insbesondere Innenausstattungsteile, beispielsweise der Rahmen eines Sitzteils, so an der Karosserie des Fahrzeuges befestigt werden können, dass das Befestigungsmittel alle dynamischen und statischen Belastungen, die auf das Ausstattungsteil , insbesondere auf den Clip, wirken, aufnehmen kann. Ferner kann das Befestigungsmittel die im Rahmen eines Crash-Test anfallenden Belastungen, insbesondere gegen Herausreißen aufnehmen und ist leicht entnehmbar. Dieses Befestigungsmittel weist ein Gehäuse mit Armen auf. An diesen Armen sind Verrastflächen vorgesehen, die rastend mit einem Teil des Automobils, insbesondere mit der Karosserie des Automobils zusammenwirken und ein zu befestigendes Ausstattungsteil, insbesondere ein Innenaustattungsteil, daran zu befestigen.

Erfindungsgemäß weist das Befestigungsmittel einen Entriegelungsring auf, der mit den Armen zusammen wirkt, so dass deren Verrastflächen wahlweise von der Karosserie des Fahrzeuges beabstandet werden können. Dadurch kann das Teil, das an der Karosserie befestigt ist, entfernt werden.

Ein Ring im Sinne der Erfindung ist jedes Gebilde, das im Vergleich zu seiner restlichen Fläche eine vergleichsweise große Ausnehmung aufweist. Der Ring muss nicht kreisförmig oder oval sein, sondern kann auch eine im Wesentlichen rechteckige oder quadratische Außenkontur oder jede sonstige beliebige Kontur aufweisen.

Vorzugsweise ist der Entriegelungsring translatorisch hin und her bewegbar vorgesehen, wobei in einer Bewegungsrichtung die Arme und damit die Verrastflächen in eine entriegelnde Stellung verbracht und bei der Bewegung in die andere Richtung eine Rückstellung der Arme und damit der Verrastflächen in die verriegelnde Stellung erfolgt.

Vorzugsweise drehen sich die Arme beim ver- oder entriegeln zumindest teilweise und/oder führen eine translatorische Bewegung aus.

Vorzugsweise verringert sich der Abstand zwischen den Armen beim Entriegeln reversibel.

In einer weiteren bevorzugten Ausführungsform der vorliegenden Erfindung sind die Arme in die verriegelnde Stellung vorgespannt. Dies stellt sicher, dass das erfindungsgemäße Befestigungsmittel, sobald der Entriegelungsring nicht mehr betätigt wird, in seine verriegelnde Stellung verbracht wird.

Im Folgenden wird die Erfindung anhand der Figuren 1 bis 4 erläutert. Diese Erläuterungen sind lediglich beispielhaft und schränken den allgemeinen Erfindungsgedanken nicht ein.
- Figuren 1 und 2: zeigen das Befestigungsmittel.
- Figur 3: zeigt einen erfindungsgemäß an der Karosserie befestigten Drahtrahmen.
- Figur 3a: zeigt ein Detail von Figur 3.
- Figur 4: zeigt schematisch die Verriegelung des Drahtrahmens an der Fahrzeugkarosserie.

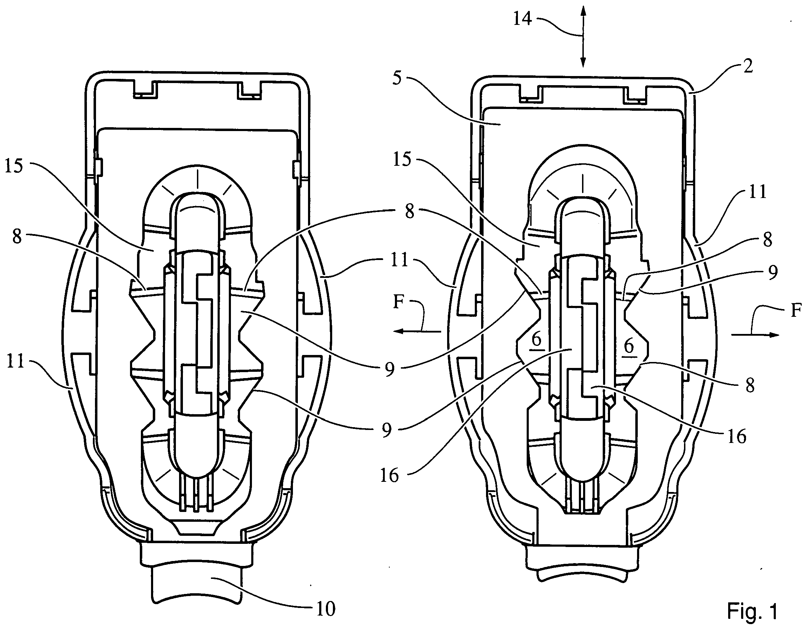

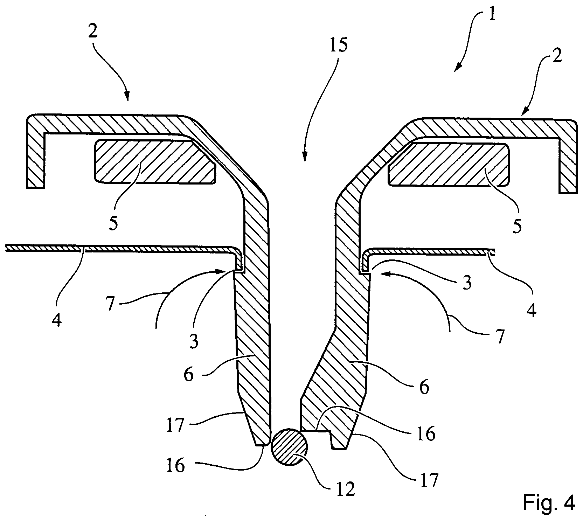

Figur 1 zeigt das Befestigungsmittel. Dies weist ein Gehäuse 2 und einen verschieblich an dem Gehäuse 2 gelagerten Entriegelungsring 5 auf. Das Gehäuse 2 weist vorzugsweise eine im Wesentlichen rechteckige Grundform auf und weist rechts und links Arme 6 auf, an denen jeweils Sperrflächen 16 vorgesehen sind, die verhindern, dass sich das zu befestigende Ausstattungsteil selbsttätig von der Karosserie löst. Zur Befestigung wird ein Abschnitt des zu befestigenden Teils durch die Sperrflächen gesteckt. In dem vorliegendem Fall sind die Sperrflächen 16 versetzt zueinander angeordnet. Des Weiteren sind dem Gehäuse 2 Federelemente 11 angeordnet, hier eingeformt, die die Arme 6 wie durch den Pfeil F symbolisiert in ihre verriegelnde Richtung vorspannen. Des Weiteren weist das Befestigungsmittel einen Entriegelungsring 5 mit einer Ausnehmung 15 auf. Diese Ausnehmung 15 umschließt zumindest teilweise die Arme 6 und weist an ihrer Innenkontur Entriegelungsflächen 9, hier Rampen auf, die mit Entriegelungsflächen 8 an den Armen 6, hier Stegen, zusammen wirken. Sobald der Entriegelungsring von der Verriegelungsstellung in die Entriegelungsstellung durch Betätigung der Handhabe 10 verbracht wird, gleiten die Stege 8 entlang den Rampen 9 und die Arme 6 werden zusammen gedrückt. Dadurch erfolgt, wie insbesondere anhand von Figur 4 ersichtlich, eine Entriegelung des Befestigungsmittels und damit ein Lösen des Ausstattungsteils von der Fahrzeugkarosserie. Beim Zusammendrücken steigt die Kraft F des Federelementes 11.

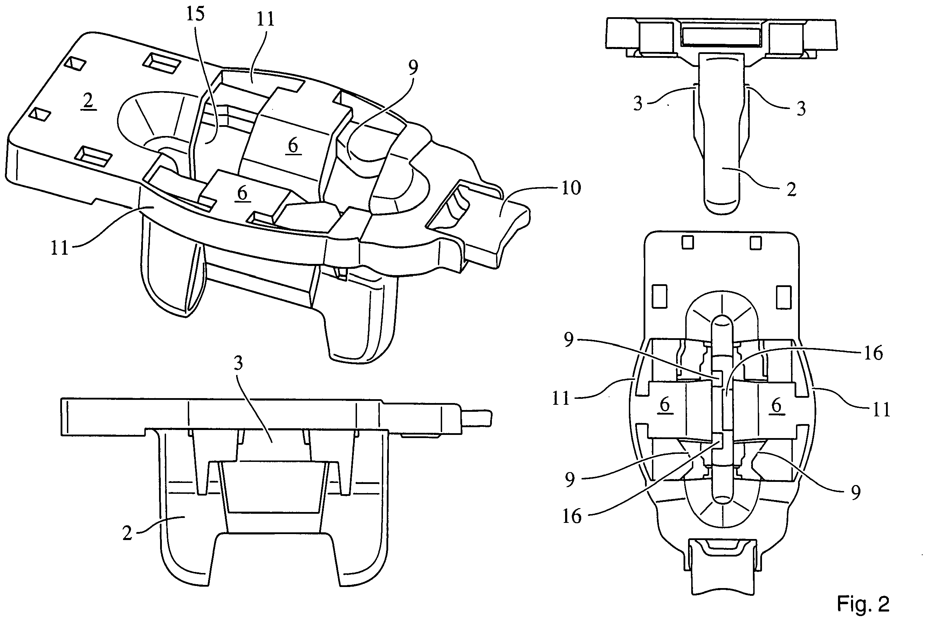

Figur 2 zeigt weitere Darstellungen des Befestigungsmittels gemäß Figur 1. Insbesondere ist aus der Darstellung links unten und rechts oben zu erkennen, dass die Arme 6 an ihrer Außenseite Verrastflächen 3 aufweisen, die mit der Fahrzeugkarosserie im Verriegelungsfall verrastend zusammenwirken, was insbesondere in Figur 4 zu erkennen ist.

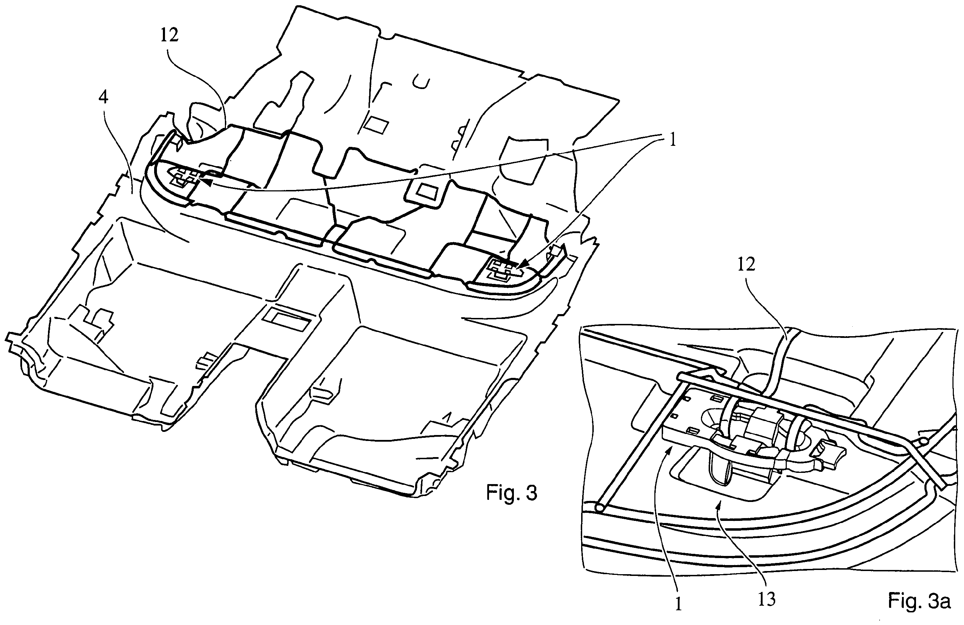

Figur 3 zeigt eine Fahrzeugkarosserie, hier den Unterbau eines Fahrzeuges 4, an dem ein Drahtrahmen 12, der Teil eines Sitzteils (nicht dargestellt) ist, mittels zwei Befestigungsmitteln 1 befestigt ist.

Wie der Detaildarstellung gemäß Figur 3a entnommen werden kann, wird zunächst der Drahtrahmen 12 an dem Befestigungsmittel 1 befestigt, indem ein Abschnitt des Drahtes zwischen den Sperrflächen 16 des Verriegelungselementes hindurchgeführt und das Verriegelungselement dann in eine Ausnehmung 13 der Fahrzeugkarosserie 4 eingeführt wird, mit der das Befestigungsmittel 1 dann verrastet.

Diese rastende Stellung ist aus Figur 4 ersichtlich. Die Verrastflächen 3 wirken mit der Fahrzeugkarosserie 4 verrastend zusammen. Um diese rastende Verbindung aufzuheben, kann der Entriegelungsring 5 so senkrecht zur Papierebene bewegt werden, dass er die Arme 6 des Gehäuses 2 zusammendrückt, so dass die Verrastflächen 3 außer Eingriff mit der Karosserie 4 geraten. In dem vorliegenden Fall ist diese entriegelnde Bewegung der Arme 6 durch die Pfeile 7 dargestellt. Ebenfalls ist aus dieser Darstellung ersichtlich, dass die Arme 6 Sperrflächen 16 aufweisen, die verhindern, dass sich der Drahtrahmen 12 in der verriegelnden Stellung selbsttätig aus dem Befestigungsmittel lösen kann.

Ebenfalls ersichtlich ist aus dieser Darstellung, dass im unteren Bereich der Arme, schräge Flächen 17 vorgesehen sind, die beim Einführen des Befestigungsmittels in die Ausnehmung 13 der Karosserie mit der Umrandung der Ausnehmung 13 zusammenwirken und die Arme 6 des Gehäuses 2 zusammendrücken. Sobald das Befestigungsmittel weit genug in die Ausnehmung 13 eingeführt worden ist, rasten die Verrastflächen 3 an der Karosserie 4 ein, so dass das Befestigungsmittel 1 nicht mehr selbsttätig von dieser entfernt werden kann.

### Bezugszeichenliste:

- 1: Befestigungsmittel
- 2: Gehäuse
- 3: Verrastflächen
- 4: Teil eines Automobils, Unterbau, Fahrzeugkarosserie
- 5: Entriegelungsring
- 6: Armen
- 7: Entriegelungsbewegung
- 8: Entriegelungsfläche an dem Gehäuse, Vorsprung
- 9: Entriegelungsfläche an dem Entriegelungsring, Rampe
- 10: Handhabe
- 11: Federelemente
- 12: Drahtrahmen, Sitzteil
- 13: Ausnehmung
- 14: Bewegungsrichtung des Entriegelungsrings
- 15: Ausnehmung
- 16: Sperrfläche
- 17: Rampe, Schräge
- F: Vorspannkraft

## Patentansprüche

1. Fahrzeug (4) mit einer Karosserie und einem Sitzteil, wobei das Sitzteil einen Drahtrahmen (12) aufweist, der mit zwei Befestigungsmitteln (1) reversibel an dem Unterbau der Karosserie befestigt ist, wobei jedes Befestigungsmittel ein Gehäuse (2) mit Armen (6) aufweist, an denen Verrastflächen (3) vorgesehen sind, die rastend mit dem Unterbau der Karosserie (4) zusammenwirken, **dadurch gekennzeichnet, dass** das Befestigungsmittel einen Entriegelungsring (5) aufweist, der mit den Armen (6) zusammenwirkt um die Verrastflächen (3) von dem Unterbau der Karosserie (4) zu beabstanden.

2. Fahrzeug (4) nach Anspruch 1, **dadurch gekennzeichnet, dass** der Entriegelungsring (5) translatorisch bewegbar vorgesehen ist.

3. Fahrzeug (4) nach Anspruch 1, **dadurch gekennzeichnet, dass** sich der Entriegelungsring (5) zum Ver- und Entriegeln vor und zurück bewegt.

4. Fahrzeug (4) nach einem der voranstehenden Ansprüche, **dadurch gekennzeichnet, dass** sich die Arme (6) beim Ver- bzw. Entriegeln zumindest teilweise drehen und/oder translatorisch bewegen.

5. Fahrzeug (4) nach einem der voranstehenden Ansprüche, **dadurch gekennzeichnet, dass** sich der Abstand zwischen den Armen (6) beim Entriegeln reversibel verringert.

6. Fahrzeug (4) nach einem der voranstehenden Ansprüche, **dadurch gekennzeichnet, dass** die Arme (6) in die verriegelnde Stellung vorgespannt sind.

## Claims

1. Vehicle (4) with a body and a seat part, wherein the seat part has a wire frame (12) which is fastened reversibly to the substructure of the body by two fastening means (1), wherein each fastening means has a housing (2) with arms (6) on which latching surfaces (3) are provided which interact in a latching manner with the substructure of the body (4), **characterized in that** the fastening means has an unlocking ring (5) which interacts with the arms (6) in order to space the latching surfaces (3) from the substructure of the body (4).

2. Vehicle (4) according to Claim 1, **characterized in that** the unlocking ring (5) is provided so as to be movable in a translational manner.

3. Vehicle (4) according to Claim 1, **characterized in that** the unlocking ring (5) moves forward and back for the locking and unlocking.

4. Vehicle (4) according to one of the preceding claims, **characterized in that** the arms (6) at least partially rotate and/or move in a translational manner during the locking or unlocking.

5. Vehicle (4) according to one of the preceding claims, **characterized in that** the distance between the arms (6) is reversibly reduced during the unlocking.

6. Vehicle (4) according to one of the preceding claims, **characterized in that** the arms (6) are prestressed into the locking position.

## Revendications

1. Véhicule (4) comprenant une carrosserie et une partie de siège, la partie de siège présentant un cadre en fil métallique (12) qui est fixé de manière réversible au châssis de la carrosserie par deux moyens de fixation (1), chaque moyen de fixation présentant un boîtier (2) avec des bras (6) au niveau desquels sont prévues des surfaces d'encliquetage (3) qui coopèrent par encliquetage avec le châssis de la carrosserie (4), **caractérisé en ce que** le moyen de fixation présente une bague de déverrouillage (5) qui coopère avec les bras (6) afin d'espacer les surfaces d'encliquetage (3) du châssis de la carrosserie (4).

2. Véhicule (4) selon la revendication 1, **caractérisé en ce que** la bague de déverrouillage (5) est prévue de manière à pouvoir être déplacée en translation.

3. Véhicule (4) selon la revendication 1, **caractérisé en ce que** la bague de déverrouillage (5) se déplace d'avant en arrière pour le verrouillage et le déverrouillage.

4. Véhicule (4) selon l'une quelconque des revendications précédentes, **caractérisé en ce que** les bras (6), lors du verrouillage ou du déverrouillage, tournent au moins en partie et/ou se déplacent en translation.

5. Véhicule (4) selon l'une quelconque des revendications précédentes, **caractérisé en ce que** la distance entre les bras (6) diminue de manière réversible lors du déverrouillage.

6. Véhicule (4) selon l'une quelconque des revendications précédentes, **caractérisé en ce que** les bras (6) sont précontraints dans la position de verrouillage.
